(19) Europäisches Patentamt
European Patent Office
Office européen des brevets

(11) **EP 2 415 528 B1**

(12) **EUROPEAN PATENT SPECIFICATION**

(45) Date of publication and mention
of the grant of the patent:
**27.04.2016 Bulletin 2016/17**

(21) Application number: **10758719.8**

(22) Date of filing: **30.03.2010**

(51) Int Cl.:
**B05B 13/04** (2006.01)    **F16N 7/38** (2006.01)
**E21B 17/00** (2006.01)    **B05B 13/06** (2006.01)
**B05D 1/00** (2006.01)    **F16N 7/34** (2006.01)

(86) International application number:
**PCT/JP2010/055706**

(87) International publication number:
**WO 2010/113948 (07.10.2010 Gazette 2010/40)**

(54) **DEVICE AND METHOD FOR APPLYING LUBRICANT TO SCREW THREAD SECTION OF STEEL PIPE**

VORRICHTUNG UND VERFAHREN ZUM AUFTRAGEN EINES SCHMIERSTOFFES AUF DEN SCHRAUBGEWINDEBEREICH EINES STAHLROHRS

DISPOSITIF ET PROCÉDÉ POUR APPLIQUER UN LUBRIFIANT À UNE SECTION FILETÉE D'UN TUYAU EN ACIER

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.03.2009 JP 2009081318**

(43) Date of publication of application:
**08.02.2012 Bulletin 2012/06**

(73) Proprietors:
• **Nippon Steel & Sumitomo Metal Corporation**
**Tokyo 100-8071 (JP)**
• **VALLOUREC OIL AND GAS FRANCE**
**59620 Aulnoye-Aymeries (FR)**

(72) Inventors:
• **NAKAMURA Takumi**
**Osaka-shi**
**Osaka 541-0041 (JP)**
• **SAKAI Kenta**
**Osaka-shi**
**Osaka 541-0041 (JP)**
• **MASUBUCHI Jun**
**Osaka-shi**
**Osaka 541-0041 (JP)**
• **HIRAISHI Yusuke**
**Osaka-shi**
**Osaka 541-0041 (JP)**

(74) Representative: **Jackson, Martin Peter**
**J A Kemp**
**14 South Square**
**Gray's Inn**
**London WC1R 5JJ (GB)**

(56) References cited:
WO-A1-2006/065149    WO-A1-2008/044799
JP-A- S 623 027    JP-A- 1 096 936
JP-A- 1 096 936    JP-A- 4 180 860
JP-A- 58 219 964    JP-A- 58 219 965
JP-A- 60 205 091    JP-A- 2008 095 019
JP-A- 2008 284 470    JP-U- 52 131 770

**Description**

Technical Field

This invention relates to an apparatus and method for applying a lubricant to a threaded portion of a steel pipe. More specifically, it relates to a lubricant applying apparatus and method suitable for application of a highly viscous (semidry type) lubricant to the surface of a threaded portion of a threaded joint for pipes formed on an end portion of a steel pipe, namely, to the surface of male (external) threads formed on the outer surface of the end of a pipe or to the surface of female (internal) threads formed on the inner surface of the end of a pipe.

Background Art

Oil country tubular goods such as tubing and casing used for the excavation of oil wells are assembled to a necessary length in the field by successively connecting steel pipes each having a length of ten some meters by threaded joints. A threaded joint for pipes typically has a pin-box structure using a pin, which is a joint component having male threads, and a box, which is the other mating joint component having female threads. A coupling-type threaded joint which is typically used for connecting oil country tubular goods has a pin formed on the outer surface of both ends of a steel pipe constituting an oil country tubular good and a box formed on the inner surface on both sides of a separate short joint member referred to as a coupling. In some cases, an integral-type threaded joint for pipes in which a pin is formed on the outer surface of one end of a steel pipe and a box is formed on the inner surface of the other end of the pipe is used instead of a coupling-type threaded joint for pipes.

The depth of a usual oil well is 2,000 - 3,000 meters, but in recent years, the depth has reached 8,000 - 10,000 meters or more in deep wells such as marine oil wells. As a result, in the environment of use, a threaded joint used for connecting oil country tubular goods undergoes the stresses caused by an axial tensile force due to the weight of oil country tubular goods and the joint itself as well as combined internal and external pressures and heat. Therefore, it must be able to maintain gastightness without being damaged under such severe conditions of use. During the process of lowering tubing or casing into a well, a threaded joint which has once been tightened is sometimes loosened and retightened. According to API (American Petroleum Institute) standards, it is necessary for a joint to maintain gastightness without undergoing unrecoverable seizing referred to as galling even if tightening (makeup) and loosening (breakout) are carried out ten times for a threaded joint for tubing and three times for a threaded joint for casing.

There is a type of threaded joint for pipes having excellent gastightness under high stresses which is referred to as a premium joint and which can form a metal-to-metal seal. A premium joint has a threaded portion and an unthreaded metal contact portion on both a pin and a box. The unthreaded metal contact portions of the pin and the box directly contact each other and form a metal-to-metal seal having excellent gastightness. The unthreaded metal contact portion of the pin is constituted by a metal sealing surface positioned on the outer peripheral surface of the pin closer to the end than the threaded portion and a torque shoulder on the end face of the pin. Correspondingly, a metal sealing surface and a torque shoulder are also provided on the inner peripheral surface of the box. When the pin is inserted into the box and the threads are tightened until the torque shoulders of the pin and the box contact each other, the metal sealing surfaces of the pin and the box intimately contact each other with a predetermined amount of interference to form a metal-to-metal seal. A portion of the compressing load due to tightening is borne by the contacting torque shoulders, whereby the stresses acting on the threaded portions are decreased.

However, with a premium joint, galling easily takes place particularly in the unthreaded metal contact portions and particularly the metal sealing portions thereof, so lubrication is important to prevent galling. Up to now, a highly viscous greasy lubricating referred to as dope or compound grease has generally been applied prior to shipment to the threads and the unthreaded metal contact portions of a threaded joint for oil country tubular goods, which define the surfaces where the pin and the box contact each other at the time of makeup (referred to below simply as the contact surfaces of a threaded joint) with the object of increasing galling resistance and gastightness and protecting the contact surfaces against rusting up to the time of use.

In the case of a threaded joint for oil country tubular goods of the coupling type, in order to increase the roundness and the accuracy of the shape of the end surface of a long steel pipe and prevent fluid flowing inside the pipe from being disturbed at the surface where two members are joined to each other, a tapered recess (also referred to as a chamfer) is often provided on the inner surface of the pin adjacent to its end surface where it is joined to a box. Dope is also applied to the recess of the pin with the object of preventing rust.

Thus, on the end of a steel pipe which forms a pin, dope is applied not only to the outer surface and the end surface of the pipe which constitute a contact surface of the pin which contacts a box, but it is also applied to the inner surface of the steel pipe adjacent to the pipe end in which a recess is formed. A conventional dope called compound grease contains a large amount of powder of heavy metals such as Pb and Zn in order to guarantee lubricating properties and rust prevention (corrosion resistance). Application of dope is normally carried out by brush coating, namely, by putting a suitable amount of dope onto a contact surface of a threaded joint and then spreading it with a brush.

Below-listed Patent Documents 1 and 2 disclose a lubricant applying apparatus having a nozzle head which sprays a lubricant and a brush which spreads the sprayed lubricant as apparatuses for applying a lubricating such as a grease to a threaded portion of a threaded joint for pipes.

As a result of the enactment in 1998 of the OSPAR Convention (Oslo-Paris Convention) for preventing maritime pollution in the Northeast Atlantic, strict environmental regulations have been developed on a global scale. Particularly in North Sea oil fields, the use of lubricants containing heavy metals is prohibited in order to prevent marine pollution. Therefore, in the drilling of gas wells or oil wells on ocean rigs, there is a need to minimize the discharge of substances causing maritime pollution into the environment. For this purpose, it is a trend to require an assessment of the environmental impact of substances which could be discharged from rigs into the environment and prohibit the use of substances which do not satisfy the requirements of the country or region where drilling is taking place. Accordingly, in recent years, lubricants which can cope with such a demand are being developed. Such lubricants can be largely divided into solid lubricants which are not discharged into the sea at all (completely dry types) and highly viscous, high viscosity lubricants (semidry types) which have low toxicity even if they are discharged into the sea.

A completely dry type coating is typically a solid lubricating coating which comprises a lubricating powder dispersed in an inorganic or organic resin binder. This type of a lubricating coating does not have fluidity and has poor lubricating properties. This is because when it is subjected to a high pressure during makeup of a threaded joint for pipes, the coating is sometimes damaged, and galling takes place in the damaged portion. In contrast, when a lubricating coating formed from a semidry lubricant is subjected to a high pressure during makeup, the coating flows and moves around to locations where the lubricant is inadequate. As a result, it has excellent lubricating properties. However, since the lubricant which oozes out during makeup may possibly be discharged into the sea, a semidry type is inferior to a completely dry type from an environmental standpoint. Thus, a semidry type is advantageous when lubricating properties (galling resistance) are important. A semidry type which is superior with respect to galling resistance and gastightness is particularly suitable as a lubricant in the case of a premium joint which has a metal-to-metal seal having excellent gastightness but in which galling easily takes place in the metal-to-metal seal.

Patent Document 3 discloses a highly viscous lubricating coating composition having low toxicity (referred to below as "green dope") which contains at least one basic oily lubricant selected from a basic sulfonate salt, a basic salicylate salt, a basic phenate salt, and a basic carboxylate salt and which has biodegradability (expressed as a value of BOD, biological oxygen demand) of at least 20% when measured after 28 days in sea water. Patent Document 3 also discloses that this lubricating coating composition may contain at least one other oily lubricant having higher biodegradability than the basic oily lubricant (preferably at least one substance selected from a fatty acid metal salt and a wax) and if necessary a volatile organic solvent.

The term highly viscous lubricant used herein means a lubricant having a viscosity which is too high to be sprayed as it is so that adjustment of its viscosity is necessary in order to make it sprayable.

    Patent Document 1 JP 58-219964 A
    Patent Document 2 JP 62-61667 A
    Patent Document 3 US 2009/0264326 A1

WO 2006/065149 discloses a lubricant application apparatus in accordance with the pre-characterizing section of claim 1.

JP S62-3027 discloses a metering pump for a mold surface liquid lubricant.

Disclosure of Invention

With a conventional dope containing large amounts of heavy metal powder (compound grease and the like), only the minimum required coating weight was prescribed, and there was little need to strictly control the applied amount. Therefore, the necessary coating weight could be adequately guaranteed by brush application.

However, even though green dope has low toxicity, there is a demand to suppress the amount of lubricant which oozes out during makeup of a threaded joint for pipes as much as possible in order to minimize environmental pollution and particularly marine pollution. Reducing the amount which oozes out also improves the ease of makeup and the work environment. Therefore, the range for the coating weight of green dope is set to a considerably narrow range. Thus, when green dope is applied to the surface of a threaded joint for pipes, there is a demand that the applied amount be controlled so as to be as thin and uniform as possible within a range which can guarantee lubricating properties.

As the lubricant applying apparatuses disclosed in Patent Documents 1 and 2 both apply a lubricant to the pin and the box on the end of a pipe using a brush, there is a limit to how thinly and uniformly a highly viscous lubricant can be applied. A minute difference develops in the thickness of deposited lubricant between portions which are contacted by the hairs of a brush and those which are not contacted. In particular, the hairs of a brush strongly contact the ridge or crest of a thread so that the lubricant is worn and becomes thin. Furthermore, when performing application using a brush, there is a limit to how small the applied thickness can be made. Thus, in practice, it was impossible to apply a highly viscous lubricant like green dope to a thickness on the order of 10 $\mu$m or less, for example.

The object of the present invention is to provide an apparatus and method for applying a lubricant to a threaded portion of a steel pipe which can thinly and uniformly apply a controlled amount of a highly viscous lubricant having a high viscosity on the surfaces of a threaded portion formed on the end of a long steel pipe.

The present invention is an apparatus for applying a lubricant to a threaded portion formed on the outer or inner surface on the end of a steel pipe which constitutes a pin or a box of a threaded joint for pipes the apparatus comprising a steel pipe support unit which supports the steel pipe while rotating the pipe about its central axis, a lubricant spraying unit comprising a lubricant feed passage for feeding the lubricant, an air feed passage designed to feed air for atomization independently of the lubricant feed passage, and at least one spray gun having a nozzle at its tip designed to spray lubricant at the outer or inner surface on the end of a steel pipe through the nozzle, the lubricant and air feed passages having a junction in the vicinity of the nozzle of the spray gun to atomize the lubricant, and a spray gun support unit which supports the spray gun such that it can move in the axial and/or radial direction of the steel pipe, characterized by further comprising: a lubricant circulation system comprising a tank for storing a lubricant which has a sprayable viscosity, piping through which the lubricant can circulate, and a pump for forcing the lubricant to circulate through the piping, a metering unit comprising a metering pump in order to meter the feed of lubricant circulating through the lubricant circulation system, and wherein the lubricant feed passage is for feeding the lubricant fed by the metering unit, the at least one spray gun comprises two spray guns to spray lubricant at the threaded portion formed on the outer surface of the end of the steel pipe which constitutes the pin, the two spray guns are located in positions different in the circumferential direction of the steel pipe, and a first spray gun of the two spray guns is sloped by 20-40° towards the end of the steel pipe with respect to a surface perpendicular to the longitudinal axis of the steel pipe, and a second spray gun of the two spray guns is sloped by 20 to 40° away from the end of the steel pipe with respect to a surface perpendicular to the longitudinal axis of the steel pipe.

Preferred embodiments of an apparatus for applying a lubricant to a threaded portion of a steel pipe according to the present invention include the following.

- The metering pump is a rotary plunger pump.
- The lubricant comprises at least one basic oily lubricant selected from a basic sulfonate salt, a basic salicylate salt, a basic phenate salt, and a basic carboxylate salt and has a biodegradability (BOD value) after 28 days in sea water of at least 20%.
- The viscosity of the lubricant is adjusted by diluting with a volatile solvent or by heating.
- The tank has a stirrer for stirring the lubricant contained in the tank.
- The apparatus further comprises a controlling unit for controlling the rotational speed of a steel pipe by the steel pipe support unit and the speed of movement of the spray gun by the spray gun support unit so as to satisfy the relationship given by Equation (1): $V \leq m \times n \times L$ wherein L is the length of the major axis (mm) of the sprayed pattern on the surface of the pipe of lubricant which is sprayed from the spray gun, n is the rotational speed (rpm) of the steel pipe, m is the number of nozzles in the axial direction of the steel pipe, and V is the speed of movement (mm/minute) of the spray gun by the spray gun support unit in the axial direction.

From another standpoint, the present invention is a method of applying a lubricant to a threaded portion formed on the outer or inner surface on the end of a steel pipe which constitutes a pin or a box of a threaded joint for pipes, the method comprising feeding lubricant and atomizing air separately to at least one spray gun having a nozzle at its tip, the lubricant having a viscosity adjusted so that it is sprayable, mixing the supplied lubricant and the atomizing air in the vicinity the nozzle of the at least one spray gun for atomization of the lubricant, and spraying the atomized lubricant at the threaded portion of the steel pipe from the nozzle of the at least one spray gun while the at least one spray gun is moved in the axial direction and/or the radial direction of the steel pipe and the steel pipe is rotated about its central axis, characterized in that: the lubricant is circulated, the spraying comprises spraying the atomised lubricant at the threaded portion formed on the outer surface of the end of the steel pipe which constitutes the pin from the nozzle of a first and a second spray gun of the at least one spray gun while the first and second spray guns are moved in the axial direction and/or the radial direction of the steel pipe and the steel pipe is rotated about its central axis, the first spray gun and the second spray gun being located in positions different in the circumferential direction of the steel pipe, the first spray gun of the two spray guns is sloped by 20-40° towards the end of the steel pipe with respect to a surface perpendicular to the longitudinal axis of the steel pipe, and the second spray gun of the two spray guns is sloped by 20 to 40° away from the end of the steel pipe with respect to a surface perpendicular to the longitudinal axis of the steel pipe.

According to the present invention, a highly viscous lubricant can be thinly and uniformly applied with a predetermined coating weight to a threaded portion of a threaded joint for pipes formed on the outer or inner surface on the end of a steel pipe, in particular to the surface of a pin which is typically formed on the end of a long steel pipe and which is difficult to coat. More specifically, a highly viscous lubricant can be uniformly applied to a thickness which is as small as 1/10 of a conventional thickness.

Brief Explanation of the Drawings

Figure 1 is an explanatory view schematically showing the structure of an apparatus for applying lubricant to a threaded portion of a steel pipe according to the present invention.

Figure 2 is an explanatory view showing the cross-sectional shape of a pin of a steel pipe.

Figure 3(a) is an explanatory view schematically showing the state in which two spray guns spray a lubricant towards the surface of threads at right angles thereto, and Figure 3(b) is an explanatory view schematically showing the state in which two spray guns spray a lubricant at different oblique angles with respect to the surface of threads.

Figure 4 is an explanatory view showing the state of spraying when spraying is carried out obliquely onto a thread.

Figure 5 is an explanatory view showing an embodiment in which two spray guns having a spray angle different from each other are provided in positions which are circumferentially different from each other.

Modes for Carrying Out the Invention

Below, embodiments of the present invention will be explained in detail while referring to the attached drawings. In the following description, unless otherwise specified, percent with respect to a composition means mass percent.

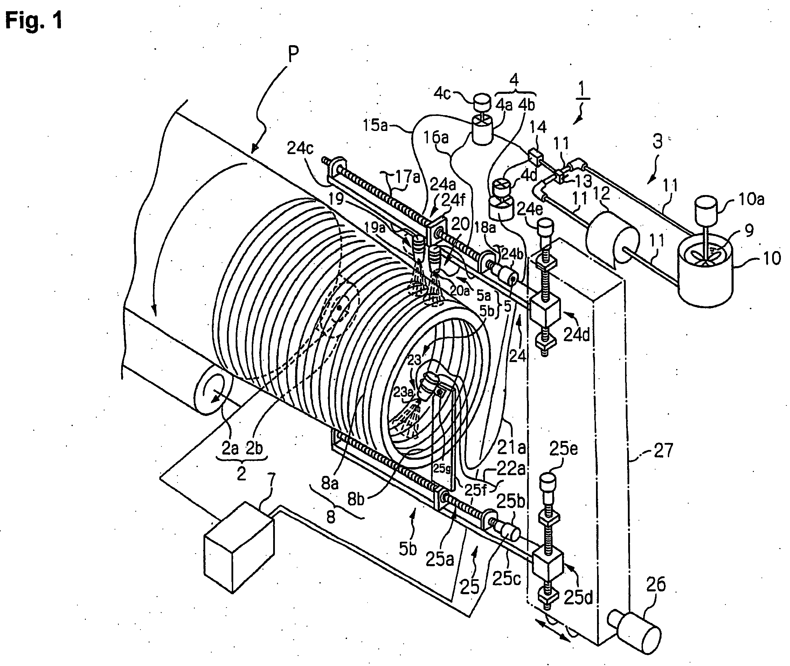

Figure 1 is an explanatory view schematically showing the structure of an apparatus 1 for applying a lubricant to a threaded portion of a steel pipe according to the present invention. A steel pipe P such as an oil country tubular good (OCTG) or a riser pipe having an end 8 to which lubricant is applied has a male (external) threaded portion 8a on the outer surface of the end 8 and a female (internal) threaded portion 8b on the inner surface thereof. The male threaded portion 8a constitutes a pin of a threaded joint for pipes, while the female threaded portion 8b can constitute a box thereof. In the following description, the male and female threaded portions 8a and 8b are referred to as pin 8a and box 8b, respectively.

However, as is obvious to a skilled artisan, actually a box is not formed inside a pin at one end of a steel pipe P. A box is formed on the inner surface of a coupling, a separate member, in the case of a threaded joint of the coupling type or on the inner surface of the other end of a second steel pipe P in the case of a threaded joint of the integral type. Therefore, either pin or box is formed on one end of a steel pipe P. For the sake of convenience to show that a lubricant applying apparatus according to the present invention can be apply lubricant both to the pin and to the box of a threaded joint, Figure 1 is depicted so as to have a threaded portion on both the outer and inner surfaces on the end of a steel pipe P.

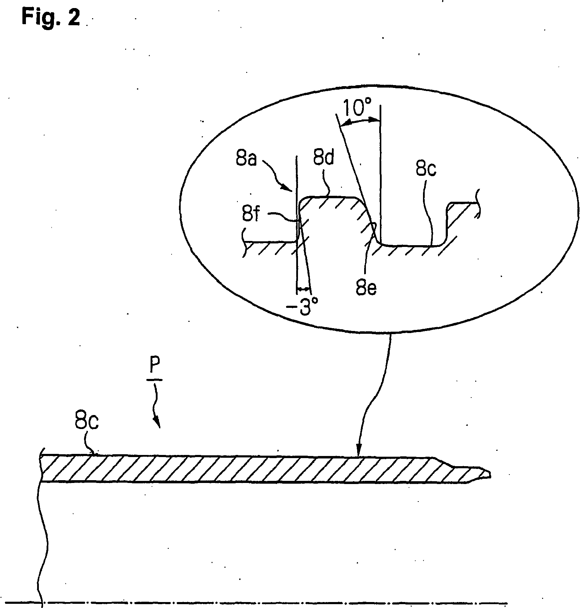

As described previously, on the inner surface of a pin of a threaded joint close to its end, namely, close to the end of a steel pipe, in place of a threaded portion as depicted in Figure 1, a tapered recess (or chamfer) is formed (see Figure 2). A lubricant applying apparatus according to the present invention can apply lubricant not only to a pin or the outer surface on the end of a steel pipe but also to the recess which is often formed on the inner surface of the pin. Thus, a lubricant applying apparatus according to the present invention can apply lubricant not only to a threaded portion on the outer or inner surface on the end of a steel pipe but also to the other surface of the end of the pipe.

As shown in Figure 1, a lubricating applying apparatus 1 comprises a steel pipe support unit 2, a lubricant circulation system 3, a metering unit 4, a lubricant spraying unit 5, a spray gun support unit 6, and preferably a controlling unit 7. These components will be explained in sequence.

[Steel Pipe Support Unit 2]

The steel pipe support unit 2 supports a steel pipe P having a pin 8a or a box 8b which is a threaded portion formed on the end of a pipe while rotating the pipe about its central axis in the direction shown by the arrow in Figure 1.

In Figure 1, turning rollers 2a, 2b which support the lower portion of a steel pipe P and are drivingly rotated in the direction of the arrow in Figure 1 are used to constitute the steel pipe support unit 2, but the present invention is not limited thereto, and any device which is known to have the same function as this type of steel pipe support unit can equally be used. Therefore, a further explanation of the steel pipe support unit 2 will be omitted.

[Lubricant Circulation System 3]

The lubricant circulation system 3 allows to circulate lubricant 9 which has been adjusted to have a viscosity suitable for spraying in order to stabilize the flow of the lubricant 9 and hence improve the uniformity of the discharge rate of lubricant 9 which is sprayed by the below-described lubricant spraying unit 5.

**EP 2 415 528 B1**

The lubricant circulation system 3 shown in Figure 1 has a tank 10 which stores lubricant 9 having an adjusted viscosity so as to make it sprayable, piping 11 through which the lubricant 9 circulates, and a pump 12 for allowing the lubricant to run through the piping 11.

The lubricant 9 which is used is one capable of forming a highly viscous (semidry) lubricating coating. Preferably, the lubricant is a green dope which has a minimized adverse effect on the environment even if it runs out More preferably, it is a lubricating coating composition described in Patent Document 3 listed above. Namely, the lubricant 9 comprises at least one basic oily lubricant selected from a basic sulfonate salt, a basic salicylate salt, a basic phenate salt, and a basic carboxylate salt and has a biodegradability (BOD) after 28 days in sea water of at least 20%.

A means for adjusting the viscosity of a highly viscous lubricant so that it is sprayable may be either diluting the lubricant with a volatile solvent or heating the lubricant. An example of the composition of the lubricant 9 when it is diluted with a volatile solvent is petroleum solvent: 20 - 30 % (a diluting solvent), petroleum wax: 5 - 10%, rosin: 5 - 10%, graphite: 3 - 5%, remainder: petroleum-derived basic calcium sulfonate salt (as a basic oily lubricant). An example of a lubricant having such a composition is commercially available under the tradename CWSD EVS from Daido Chemical Industry Co., Ltd..

The tank 10 is equipped with a conventional stirring mechanism 10a for stirring the lubricant 9 housed in the tank 10. Stirring the lubricant 9 housed in the tank 10 with the stirring mechanism 10a serves to stabilize the composition of the lubricant 9 and hence improve the uniformity of the discharge rate of the lubricant 9 which is sprayed from the below-described lubricant spraying unit 5.

The piping 11 has a three-way valve 13, and one of the flow passages connected to the three-way valve 13 has a solenoid valve 14. By opening the cock of the three-way valve 13 and suitably switching the solenoid valve 14, the lubricant 9 which circulates through the lubricant circulating system 3 can be fed so as to apply either the pin 8a or the box 8b.

[Metering Unit 4]

The metering unit 4 is provided for metered feed of lubricant 9 which has an adjusted viscosity and circulates through the lubricant circulation system 3. It comprises a metering pump. In the illustrated embodiment, a rotary plunger pump is used as a metering pump, but any metering pump can be used as long as metered feeding of a sprayable viscous liquid is possible.

In the illustrated embodiment, the metering unit 4 is constituted by a first metering pump 4a for metered feeding of the lubricant to a first lubricant spraying unit 5a for applying lubricant 9 to the pin 8a (or the outer surface of an end of a steel pipe) and a second metering pump 4b for metered feeding of the lubricant to a second lubricant spraying unit 5b for applying lubricant 9 to the box 8b (or the inner surface of an end of a steel pipe).

The first metering pump 4a and the second metering pump 4b are both rotary plunger pumps which control the discharge rate of lubricant 9 in proportion to the rotational speed in order to control the feed rate of lubricant 9. The discharge rate of the first metering pump 4a is controlled by a servo motor 4c and the discharge rate of the second metering pump 4b is controlled by a servo motor 4d. The uniformity of the discharge rate of the lubricant 9 which is sprayed by the below-described lubricant spraying unit 5 can be improved by controlling the discharge rate of the first metering pump 4a and that of the second metering pump 4b in this manner.

[Lubricant Spraying Unit 5]

In contrast to the lubricant applying apparatus disclosed in Patent Documents 1 or 2 which applies a lubricant to a pin 8a or a box 8b by spreading it with a brush, a lubricant spraying unit 5 in the present invention sprays atomized lubricant 9 at the pin 8a or the box 8b of steel pipe P. As described above, it has a first lubricant spraying unit 5a for applying lubricant 9 to a pin 8a and a second lubricant spraying unit 5b for applying lubricant 9 to a box 8b.

The first lubricant spraying unit 5a has two spray guns 19 and 20 each having at its tip a nozzle 19a or 20a directed toward the pin 8a, lubricant feed passages 15a and 16a which send the metered lubricant 9 from the first metering pump 4a to the spray guns 19 and 20, respectively, and air feed passages 17a and 18a which send air for atomization to the spray guns 19 and 20, respectively, independently of the lubricant. The lubricant feed passage 15a or 16a and the air feed passage 17a or 18a merge at a junction (not shown) located in the vicinity of the nozzle 19a or 20a of the spray gun 19 or 20 to atomize lubricant 9, and the atomized lubricant was sprayed from the nozzles 19a, 20a towards the pin 8a of the steel pipe P.

Similarly, the second lubricant spraying unit 5b has a lubricant feed passage 21a through which metered lubricant 9 from the second metering pump 4b passes, air feed passage 22a which is independent of the lubricant feed passage 21a and through which air for atomizing passes, and a spray gun 23 which has a nozzle 23a at its tip for spraying lubricant 9 towards the box 8b of the steel pipe P. The lubricant feed passage 21a and the air feed passage 22a merge at a junction (not shown) located in the vicinity of the nozzle 23a of the spray gun 23 for atomization of lubricant and the atomized lubricant is sprayed through the nozzle 23a.

In the illustrated embodiment, the lubricant spraying unit has one or two spray guns. It is possible to install three or more spray guns in the spraying unit 5. Also in the illustrated embodiment, spray guns 19,20 by which the lubricant is sprayed toward the pin are located in positions different only in the axial direction, but in the invention the spray guns are located in positions different in the circumferential direction or both in the axial and circumferential directions.

The first lubricant spraying unit 5a and the second lubricant spraying unit 5b both use air pressure to uniformly atomize the lubricant 9 which was adjusted in viscosity so as to be sprayable and then spray it towards the pin 8a or the box 8b, respectively, of the steel pipe P through the nozzles 19a, 20a, or 23a which all can be opened or shut by air pressure. As a result, the stability of the discharge rate of lubricant 9 which is sprayed from the lubricant spraying unit 5 can be improved.

[Spray Gun Support Unit 6]

The spray gun support unit 6 has a mechanism for supporting the spray guns 19,20, and 23 so as to be able to move in the axial and/or radial direction of a steel pipe P. In the embodiment shown in Figure 1, this unit 6 also has a mechanism for supporting spray gun 23 so as to be tiltable with respect to the surface of the box 8b. Although not shown in Figure 1, the spray gun support unit 6 may further have a mechanism for supporting spray guns 19 and 20 so as to be tiltable with respect to the pin 8a.

The spray gun support unit 6 has a first spray gun support device 24 for supporting spray guns 19 and 20 and a second spray gun support device 25 for supporting spray gun 23.

The first spray gun support device 24 comprises a ball screw 24a for axial movement which is disposed above the steel pipe P and moves a support member 24f for the spray guns 19 and 20 in the axial direction of the steel pipe P, a servo motor 24b for axial movement which drives the ball screw 24a for axial movement, a base plate 24c on which the screw 24a for axial movement ball is mounted, a ball screw 24d for radial movement which supports the base plate 24c so as to be able to move in the radial direction of the steel pipe P, and a servo motor 24e for radial movement which drives the ball screw 24d for radial movement. The ball screw 24d for radial movement is secured to the front surface of a box shaped body 27 which can be moved backwards and forwards by an air cylinder 26.

In this manner, the spray guns 19 and 20 are moveable in the axial and radial directions of the steel pipe P, and their amounts of movement and speed of movements are accurately controlled to desired values by the servo motors 24b and 24e. The positions of the nozzles 19a and 20a in the radial direction of the pin 8a of the steel pipe P, namely, the height of the spray guns 19 and 20 is set by the servo motor 24e such that the length of the major axis of the sprayed pattern of lubricant 9 on the surface of the pin 8a of the steel pipe P becomes a predetermined value L.

The second spray gun support device 25 is disposed towards the end of the steel pipe P. It has a ball screw 25a for axial movement which supports a support member 25f for the spray gun 23 in the axial direction of the steel pipe P, a servo motor 25b for axial movement which drives the ball screw 25a for axial movement, a base plate 25c on which the ball screw 25a for axial movement is mounted, a ball screw 25d for movement in the radial direction which supports the base plate 25c so as to be able to move in the radial direction of the steel pipe P, and a servo motor 25e for movement in the radial direction which drives the ball screw 25d for radial movement. The support member 25f is provided with a screw 25g which passes through it for adjusting the tilting angle of the spray gun 23 with respect to the surface of the box 8b. The ball screw 25d for movement in the radial direction is secured to the front surface of the box-shaped body 27 which can be moved forwards and backwards by the air cylinder 26.

In this manner, the spray gun 23 is movable in the axial and radial directions of the steel pipe P, and its amount of movement and speed of movement are accurately controlled to desired values by the servo motors 25b and 25e. The position of the nozzle 23 a in the radial direction of the box 8b of the steel pipe P, namely, the height of the spray gun 23 is set by the servo motor 25e to a position such that the length of the major axis of the sprayed lubricant 9 on the surface of the box 8b of the steel pipe P becomes a predetermined value L.

If the distance of nozzles 19a and 20a from the pin 8a or the distance of nozzle 23a from the box 8b is too small, there is the possibility of the nozzles 19a, 20a, or 23a contacting the steel pipe P, while if the distance is too large, the sprayed lubricant 9 splatters and it may not be possible to obtain a desired coating thickness.

Therefore, the distance is preferably as small as possible without producing interference of equipment. From this standpoint, the distance of nozzles 19a and 20a from the pin 8a and the distance of nozzle 23a from the box 8b are preferably 30 mm to 80 mm. The angle of spray of the lubricant discharged from the nozzles is preferably in the range of 5 to 15 degrees.

Figure 2 is an explanatory view showing the cross-sectional shape of a pin 8a of a steel pipe P.

As shown in Figure 2, a male thread (external thread) formed on the surface of a pin 8a has a thread crest surface 8d which is parallel to the outer surface 8c of the steel pipe P which forms a thread root of the male thread, a flank 8e (stabbing flank) which has an angle of slope of 10° with respect to a surface perpendicular to the outer surface 8c, and a flank 8f (load flank) which is angle of slope of -3° with respect to a surface perpendicular to the outer surface 8c. The angle of slopes of the stabbing flank 8eand the load flank 8f are mere examples and can be varied. The angle of slope of the load flank may be zero degrees or have a positive value. In the following description, the flank 8e which has a positive angle of slope is referred to as a P flank, and the flank 8f which has a negative angle of slope in the illustrated embodiment is referred to as an N flank.

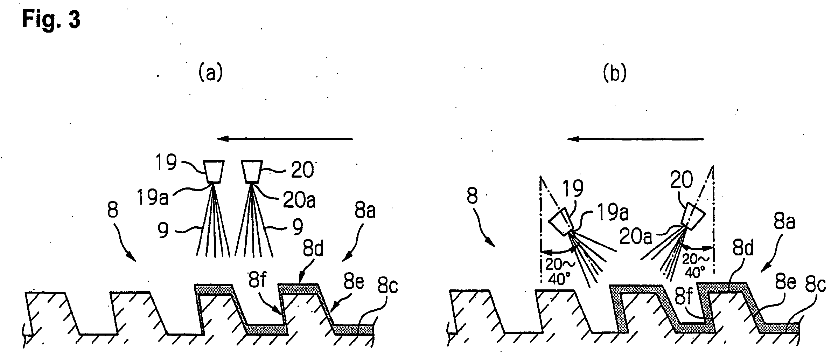

Figure 3(a) is an explanatory view schematically showing the state in which spray guns 19 and 20 spray a lubricant 9 at right angles with respect to the thread crest 8d, and Figure 3(b) is an explanatory view schematically showing the state in which the spray guns 19 and 20 spray a lubricant 9 at an oblique angle with respect to the thread crest. The arrows pointing to the left in Figure 3(a) and Figure 3(b) show the direction of axial movement of the spray guns 19 and 20. The shape of a thread is the same as depicted in Figure 2.

As shown in Figure 2, the pin 8a has a thread shape having a P flank 8e with a positive angle of slope and an N flank 8f with a negative angle of slope. Therefore, as shown in Figure 3(a), when the spray guns 19 and 20 are oriented so as to be perpendicular with respect to the thread crest 8d when spraying the lubricant 9, the lubricant 9 can be thickly applied to the surfaces of the thread root 8c and the thread crest 8d, but it is not possible to guarantee a sufficient coating thickness of the lubricant 9 on the surfaces of the P flank 8e and the N flank 8f, and the lubricant 9 can not be uniformly applied to the surface of the pin 8a.

Therefore, as shown in Figure 3(b), by spraying the lubricant 9 with spray gun 19 which is sloped by 20 - 40° towards the end of the steel pipe P (towards the right in Figure 3(b)) and with spray gun 20 which is sloped by 20 - 40° away from the end of the steel pipe P (towards the left in Figure 3(b)) or from -20 to -40°, the thread root 8c, the thread crest 8d, the P flank 8e, and the N flank 8fcan all be uniformly coated with the lubricant 9.

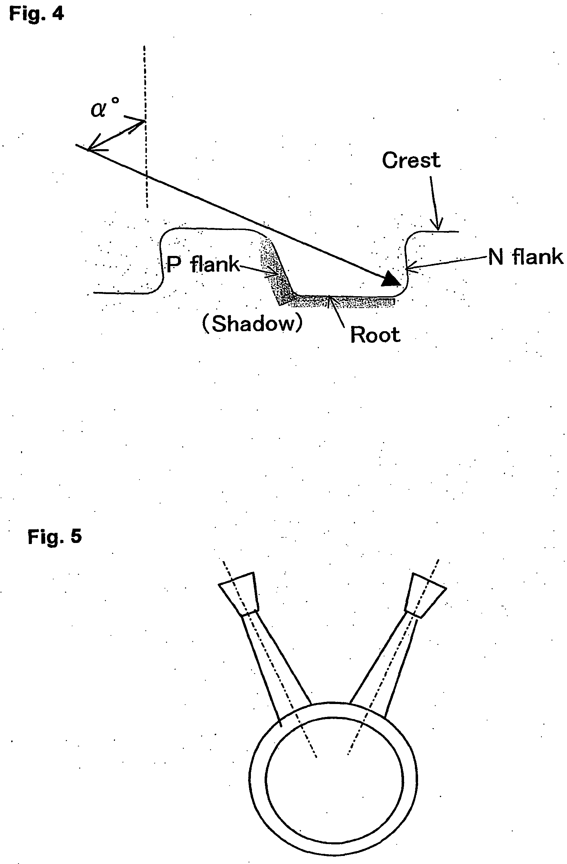

This will be explained below more fully. As shown in Figure 4, in accordance with the angle of spraying direction ex (the angle of a spraying nozzle with respect to a surface perpendicular to the longitudinal axis of the steel pipe) and the shape of the thread (thread height and the sloping angle of the flanks), the sprayed lubricant strikes on a part of thread surfaces, and the remaining portion of the thread surfaces becomes a shadow on which the lubricant does not strike due to interference of the thread shape. In the illustrated example, the surfaces of the thread root and the P flank are shadows. When the angle of each surface of a thread with respect to the spraying direction varies, the projected area of the spray on that surface varies, thereby varying the coating thickness applied to that surface.

Upon further investigation in this respect, in the case of the thread shape shown in Figure 2, each of the N flank and P flank has a shadowed portion on one side of zero degrees in which lubricant cannot be applied. It was found that by tilting the nozzle 19a of the spray gun 19 at an angle in the range of 200 to 400 and the nozzle 20a of the spray gun 20 located closer to the end of the steel pipe at an angle in the range of -20° to -40°, all the surfaces of a thread can be effectively applied with a nearly uniform coating weight.

When two spray guns (intended for application to a P flank and an N flank of a thread, respectively) in which the spraying directions of the nozzles are different from each other are used to apply lubricant to a male thread of a pin having a flank with a negative angle of slope from both sides of the thread for the purpose of uniform application, it is not preferable that the sprayed streams discharged through the two nozzles interfere with each other. As shown in Figure 5, if two spray guns are located in positions which are the same in the axial direction (so as to apply lubricant to the same thread or orient their nozzles toward the same thread), if they are arranged in positions which are different in circumferential direction as in the present invention the two sprayed streams impinging on the same thread do not interfere with each other. Thus, the two spray guns 19,20 shown in Figure 3(b) which are oriented toward the two flanks of the same male thread are located in positions which are circumferentially different from each other, although it is not apparent from the figure.

In this manner, using the spray gun support unit 6, the lubricant 9 having its viscosity adjusted so as to be sprayable is atomized by air pressure becomes a uniform mist and it is sprayed through the nozzles 19a, 20a, or 23a which can be opened and shut by air pressure towards the pin 8a or the box 8b of the steel pipe P.

Instead of using the first spray gun support devicet 24 and the second spray gun support devicet 25, it is of course possible to support the spray guns 19, 20, and 23 using a general-purpose articulated robot, for example, whereby each spray gun can be tilted.

[Controlling Unit 7]

It is not always necessary to provide the controlling unit 7, but it is preferable to provide it to stabilize spraying of the lubricant 9.

The controlling unit 7 controls the rotational speed of the steel pipe P by the steel pipe support unit 2 and the speed of axial movement of the spray guns 19 and 20 or 23 by the spray gun support unit 6 so as to satisfy the following Equation (1):

$$V \leq m \times n \times L \quad ..... \quad (1)$$

wherein L is the length of the major axis (mm) of the sprayed pattern on the pin 8a or the box 8b (or on the surface of the steel pipe) of the lubricant 9 sprayed in a conical shape from spray gun 19, 20, or 23, n is the rotational speed (rpm) of the steel pipe P by the turning rollers 2a and 2b, m is the number of nozzles 19a, 20a, or 23a in the axial direction of the steel pipe P, and V is the speed of movement (mm/min) of the spray gun 19, 20, or 23 in the axial direction by the spray gun support unit 6.

When there exist a plurality of nozzles having the same position in the axial direction of the steel pipe P but different positions in the circumferential direction thereof, these nozzles are considered to constitute a set and the number of m is made one.

The reasons why the controlling unit 7 preferably performs this function is as follows.

The lubricant applying apparatus 1 according to the present invention applies a lubricant 9 in a helical shape on a pin 8a or a box 8b of a steel pipe P by spraying a lubricant 9 having its viscosity adjusted so as to be sprayable in a conical shape on the pin 8a from nozzles 19a and 20a of spray guns 19 and 20 which move in the axial direction of the steel pipe P or from nozzle 23a of spray gun 23 on the box 8b of a steel pipe P while the pipe P is rotated in the direction of the arrow by turning rollers 2a and 2b. Therefore, if the speed of movement V of the spray guns 19, 20, or 23 in the axial direction exceeds the above value (m x n x L), uncoated portions are intermittently formed in the axial direction of the steel pipe P between the helical coating. Conversely, if the speed of movement V of the spray guns 19, 20, or 23 in the axial direction is too slow, productivity decreases, the applied thickness of the lubricant 9 becomes too large, and the lubricant 9 which was applied to the pin 8a or the box 8b may flow away.

The speed of movement V (cm/sec) of the spray guns 19, 20, and 23 in the axial direction of the steel pipe P, the coating thickness W (cm) of the lubricant 9, the overall feed rate of lubricant q (ml/sec) from nozzles 19a, 20a, and 23a, the outer diameter D (cm) of the steel pipe P, and the adhesion efficiency $\eta$ have the relationship expressed by Equation (2): q = W x nD x V/$\eta$). An example of ranges in which Equation (2) is satisfied are when the overall feed rate of lubricant q is set to 0.1 - 0.6 (ml/sec) and the speed of movement V is set to 4 - 12 (mm/sec).

As illustrated in Figure 1, in order to shorten the cycle time and increase productivity, a plurality of spray guns 19 and 20 for spraying lubricant 9 at the pin 8a of the steel pipe P are preferably provided in the axial direction of the steel pipe P (two spray guns in the illustrated example). This permits the speed of movement V of the spray guns 19 and 20 to be easily increased.

In contrast, the range over which lubricant 9 is sprayed on the box 8b of the steel pipe P is often so short that it can be covered by spraying with a single spray gun 23 which is moved in the axial direction of the steel pipe P. Therefore, when it is possible to perform adequate application with the sprayed pattern of a single spray gun 23, a single spray gun 23 may be provided. Of course, when application is not adequate with the sprayed pattern of a single spray gun 23 or it is desired to increase productivity, a plurality of spray guns for spraying lubricant 9 at the box 8b of the steel pipe P can be arranged in a row in the axial direction of the steel pipe P. In such cases, as described in the below-described example, a plurality of spray guns are preferably arranged in axially different positions such that the sprayed streams slightly overlap with each other on the surface of the steel pipe in order to avoid the occurrence of non-coated portions between the streams.

At the point where application is ended such as the end point of the threads of the steel pipe or to the rear of the threads on the inner surface, it is desirable to perform application in a circumferential direction instead of along a helical line in order to prevent unnecessary application. Therefore, at this point, it is preferable to stop the movement of the spray guns 19, 20, and 23 in the axial direction of the steel pipe and continue spraying for around 0.8 - 2.3 seconds (the time required for one rotation of the steel pipe P) before spraying is terminated.

The wet coating thickness of lubricant 9 on the pin 8a or the box 8b of a steel pipe P is preferably at least 6 $\mu$m and at most 8 $\mu$m in order to obtain good lubricating properties without oozing of the lubricant.

A lubricant applying apparatus 1 according to the present invention can form a coating of a lubricant 9 having a desired thickness, but it is preferable to satisfy the relationship given by the above-described Equation (2).

The controlling unit 7 enables the stability of discharge of lubricant 9 which is sprayed from the lubricant spraying unit 5 to be increased. The controlling unit 7 can be used to control all the movements including the movement of the main body of the applying apparatus, the movement of the nozzles in the axial and radial directions, the rotational speed of the steel pipe, the rotational speeds or other actions of pumps, and on an off of spraying.

A lubricant applying apparatus 1 according to the present invention is constituted as described above. Next, an example of a method of applying a lubricant 9 to a pin 8a on the end of a steel pipe P using this lubricant applying apparatus 1 will be explained.

First, a steel pipe P having a threaded portion in the form of a pin 8a on the end of the pipe is mounted on the turning rollers 2a and 2b, and the steel pipe P is rotated in the direction of the arrows in Figure 1 by rotatingly driving the turning rollers 2a and 2b in the direction shown by the arrow in Figure 1.

A highly viscous lubricant 9 (the above-described green dope having a biodegradability (BOD) of at least 20% after 28 days in sea water) which has been diluted with a volatile solvent to adjust its viscosity so as to be sprayable (e.g., CWSD EVS manufactured by Diado Chemical Industries, Co., Ltd.) is placed in the tank 10 of the lubricant circulating system 3. The lubricant 9 in the tank 10 is then stirred by the stirring mechanism 10a.

By setting the cock of the three-way valve 13 so as to allow circulation and starting the operation of the pump 12, the lubricant 9 is circulated through the lubricant circulating system 3.

Subsequently the solenoid valve 14 is set so as to select application of lubricant 9 to the pin 8a, and the first metering pump 4a for metered feeding to the first lubricant spraying unit 5 for applying lubricant 9 to the pin 8a is started. Lubricant 9 is thereby supplied to the first metering pump 4a.

The first metering pump 4a performs metered feeding of lubricant 9 to the spray guns 19 and 20 through the lubricant feed passages 15a and 16a. At the same time, air for atomizing is fed to spray guns 19 and 20 through air feed passages 17a and 18a by an unillustrated system for feeding air for atomizing. The lubricant 9 and the atomizing air fed to the spray guns 19 and 20 are mixed together in the vicinity of the nozzles 19a and 20a at the tips of the spray guns 19 and 20, and the lubricant 9 which is atomized by mixing with the atomizing air was sprayed towards the pin 8a of the steel pipe P through nozzles 19a and 20a.

Simultaneous with the start of this spraying, the first spray gun support unit 24 is started, and the spray guns 19 and 20 which are disposed at predetermined angles with respect to the pin 8a are moved in the axial direction of the steel pipe P at a predetermined speed V (V ≤ m x n x L) and are moved at a predetermined speed in the radial direction of the steel pipe P.

The rotational speed of the steel pipe P by the steel pipe support unit 2 and the speed of **axial** movement of the spray guns 19 and 20 by the first spray gun support unit 24 are preferably controlled by the controlling unit 7.

As a result, the lubricant 9 can be sprayed towards the pin 8a of the steel pipe P which is supported while rotating about its central axis.

As described above, with an apparatus and a method for applying lubricant to the threaded portions 8a and 8b of a steel pipe P according to the present invention, the coating thickness of lubricant 9 on the pin 8a of a steel pipe P can be controlled not only so that there is no oozing but so that good lubricating properties are obtained.

Specifically, with an apparatus and method for applying lubricant to the threaded portions 8a and 8b of a steel pipe P according to the present invention, by

(i) previously adjusting the viscosity of a highly viscous lubricant so as to be suitable for spraying by diluting with a volatile solvent or by heating,
(ii) circulating the lubricant 9 having its viscosity previously adjusted so as to be sprayable through a lubricant circulation system 3,
(iii) stirring the lubricant 9 housed in a tank 10 with a stirring mechanism 10a,
(iv) feeding lubricant 9 to spray guns 19 and 20 using a first metering pump 4a which has its discharge rate controlled by a servo motor 4c,
(v) performing fine control of the speed of movement of the spray guns 19 and 20 using the first spray gun support unit 24 having servo motors 24b and 24d as drive sources,
(vi) optimally setting the spraying angles of the spray guns 19 and 20, and
(vii) using the controlling unit 7 to performed high precision control of the rotational speed of the steel pipe P by the pipe support unit 2 and the speed of movement of the spray guns 19 and 20 by the spray guns support unit 6 so that the speed of movement V (mm/min) of the spray guns 19 and 20 in the axial direction by the spray gun support unit 6 satisfies Equation (1): V ≤ m x n x L and so as to be in the range of 15 - 25 mm/min,

the coating thickness of the lubricant 9 on the pin 8a of the steel pipe P can be controlled to be in the range of 6 - 8 $\mu$m in which not only is there no oozing of lubricant but good lubricating properties are obtained.

In the above explanation, an example was given of applying lubricant 9 to a pin 8a on the end of a steel pipe P. When applying lubricant 9 to a box 8b of a steel pipe P, the only difference is that the application of lubricant 9 to the box 8b is selected by switching the solenoid valve 14, and other conditions are exactly the same. Therefore, an explanation of applying lubricant 9 to the box 8b of the steel pipe P will be omitted.

A lubricant applying apparatus according to the present invention can be designed so as to enable simultaneous application of a lubricant to the inner and outer surfaces of an end of a steel pipe. Therefore, it is possible to simultaneously apply a lubricant to a pin on the outer surface of an end of a steel pipe and a recess portion on the inner surface of that end of the steel pipe.

In this manner, with a lubricant applying apparatus 1 according to the present invention, a green dope which is a highly viscous lubricant can for the first time be thinly and uniformly applied with a predetermined coating weight and specifically with a low thickness of around 1/10 of the conventional thickness to the surface of a pin 8a or a box 8b of a steel pipe P and particularly to the surface of a pin 8a which is typically formed on the end of a long steel pipe P and which is difficult to coat.

In a lubricant applying apparatus 1 according to the present invention for applying lubricant to threaded portions 8a and 8b of a steel pipe P, if each of the feed rate of lubricant 9 by the first metering pump 4a and the feed rate of lubricant 9 by the second metering pump 4b, the rate of circulation of lubricant 9 by pump 12, the distance of the nozzles 19a and 20a from the pin 8a, the distance of nozzle 23 from the box 8b, and the angles of the spray guns 19,20, and 23 at the time of spraying are maintained constant at previously determined values, lubricant 9 can be applied to a desired thickness to the pin 8a or the box 8b of the steel pipe P regardless of the outer diameter of the steel pipe P by using the controlling unit 7 so as to control the rotational speed of the steel pipe P by the steel pipe support unit 2 and the speed of movement of spray guns 19 and 20 by the first spray gun support unit 24 or the speed of movement of spray gun 23 by the second spray gun support unit 25.

Example 1

Using the lubricant applying apparatus 1 according to the present invention shown in Figure 1, a highly viscous lubricant 9 having its viscosity adjusted by dilution (CWSD EVS manufactured by Daido Chemical Industry Co., Ltd.) was applied to the pin 8a formed on an end of a total of 17 steel pipes 8 including one steel pipe with an outer diameter of 2.375 inches (60.3 mm), three steel pipes having an outer diameter of 2.875 inches (73.0 mm), three steel pipes having an outer diameter of 3.5 inches (88.9 mm), three steel pipes having an outer diameter of 4 inches (101.6 mm), three steel pipes having an outer diameter of 4.5 inches (114.3 mm), one steel pipe having an outer diameter of 5 inches (127.0 mm), one steel pipe having an outer diameter of 5.5 inches (139.7 mm), one steel pipe having an outer diameter of 6.625 inches (168.3 mm), and one steel pipe having an outer diameter of 7 inches (177.8 mm). The thread shape of the pin of each of these steel pipes are the same as that shown in Figure 2.

The spray guns 19 and 20 used to apply the lubricant to the pin had their nozzles oriented perpendicular to the surface of the steel pipe (thread crest) as shown in Figure 1. Thus, the nozzles of the two spray guns had the same spraying angles as shown in Figure 3(a) instead of having differently tilted angles as shown in Figure 3(b). Thus, use of two spray guns which are spaced axially was to increase the efficiency of application. In this case, the length L of the major axis of the sprayed pattern at the pin 8a of the lubricant 9 which was sprayed from the spray guns 19 and 20 in a conical shape was 20 mm. In order to prevent the formation of intermittently uncoated portions in the axial direction of the steel pipe P between the helical coating, the spacing of the spray guns 19 and 20 in the axial direction of the steel pipe P was set to 17 mm corresponding to an overlap of 15% of the sprayed axial length L (30% on both sides). If the diameter of the turning rollers 2a and 2b is H (mm) and the rotational speed of the turning rollers 2a and 2b is R (rpm), the time T' (sec) required for one rotation of the steel pipe P becomes OD/(H x R/60). Therefore, if the coated length is L (mm) and the speed of movement of the spray guns 19 and 20 is P (mm/rev), the coating time T (sec) becomes T = T' x (L/P + 2) since movement of the spray guns is stopped for one rotation at the start and at the stop of spraying to prevent uneven application.

In this coating process, the discharge rate V from the first metering pump 4a was maintained constant at 8.65 g/min and the rotational speed of the first metering pump 4a was maintained constant at 25.44 rpm regardless of the outer diameter of the steel pipe P. Therefore, the applied amount is given by T/60 x V.

The tolerance of application (Min, Max, and Median expressed in grams) was the tolerance of the overall coating weight which was obtained by actual measurement.

The results are compiled in Table 1. In Table 1, WT indicates the wall thickness of the pipe, T/R indicates the turning roller, and the pump indicates the first metering pump 4a (which was a rotary plunger pump having variable rotational speed). Pump constant indicates the volume discharged from the pump during one revolution. Pump constant and number of pump revolutions are the values in the first metering pump 4a.

Table 1

| Outer diameter | | Wall thickness WT (mm) | | Tolerance of application | | | Nozzle pitch | Thread length | Diameter of T/R | Rotational speed of T/R | T' | Coating time | Discharge rate of metering pump | Pump constant | Rotational speed of pump | Coating weight |
|---|---|---|---|---|---|---|---|---|---|---|---|---|---|---|---|---|
| in | mm | Min | Max | Min | Max | Median | mm/rev | mm | mm | rpm | sec | sec | g/min | cc/rev | rpm | g |
| 2.375 | 60.3 | 6.45 | 8.53 | 0.9 | 1.2 | 1.05 | 17 | 73.44 | 190 | 16.8 | 1.13 | 7.17 | 8.65 | 0.34 | 25.44 | 1.03 |
| 2.875 | 73.0 | 5.51 | 5.511 | 1.1 | 1.6 | 1.35 | 17 | 63.97 | 190 | 16.8 | 1.37 | 7.91 | 8.65 | 0.34 | 25.44 | 1.14 |
| 2.875 | 73.0 | 7.01 | 10.29 | 1.2 | 1.7 | 1.45 | 17 | 80.77 | 190 | 16.8 | 1.37 | 9.27 | 8.65 | 0.34 | 25.44 | 1.34 |
| 2.875 | 73.0 | 11.18 | 11.18 | 1.3 | 1.8 | 1.55 | 17 | 90.37 | 190 | 16.8 | 1.37 | 10.04 | 8.65 | 0.34 | 25.44 | 1.45 |
| 3.5 | 88.9 | 4.32 | 7.34 | 1.3 | 1.8 | 1.55 | 17 | 77.02 | 190 | 16.8 | 1.67 | 10.91 | 8.65 | 0.34 | 25.44 | 1.57 |
| 3.5 | 88.9 | 9.53 | 11.4 | 1.5 | 2.0 | 1.75 | 17 | 97.02 | 190 | 16.8 | 1.67 | 12.88 | 8.65 | 0.34 | 25.44 | 1.86 |
| 3.5 | 88.9 | 12.09 | 14.61 | 1.6 | 2.1 | 1.85 | 17 | 108.22 | 190 | 16.8 | 1.67 | 13.98 | 8.65 | 0.34 | 25.44 | 2.02 |
| 4 | 101.6 | 4.83 | 8.38 | 1.6 | 2.1 | 1.85 | 17 | 81.83 | 190 | 16.8 | 1.91 | 13.01 | 8.65 | 0.34 | 25.44 | 1.88 |
| 4 | 101.6 | 9.65 | 10.92 | 1.8 | 2.5 | 2.15 | 17 | 102.65 | 190 | 16.8 | 1.91 | 15.35 | 8.65 | 0.34 | 25.44 | 2.21 |
| 4 | 101.6 | 12.7 | 15.49 | 1.9 | 2.6 | 2.25 | 17 | 115.45 | 190 | 16.8 | 1.91 | 16.79 | 8.65 | 0.34 | 25.44 | 2.42 |
| 4.5 | 114.3 | 5.69 | 8.56 | 1.7 | 2.2 | 1.95 | 17 | 81.83 | 190 | 16.8 | 2.15 | 14.64 | 8.65 | 0.34 | 25.44 | 2.11 |
| 4.5 | 114.3 | 9.65 | 10.92 | 2.0 | 2.7 | 2.35 | 17 | 102.65 | 190 | 16.8 | 2.15 | 17.27 | 8.65 | 0.34 | 25.44 | 2.49 |
| 4.5 | 114.3 | 12.7 | 14.22 | 2.2 | 3.1 | 2.65 | 17 | 115.45 | 190 | 16.8 | 2.15 | 18.89 | 8.65 | 0.34 | 25.44 | 2.72 |
| 5 | 127.0 | 6.43 | 12.7 | 2.7 | 3.6 | 3.15 | 17 | 106.45 | 190 | 16.8 | 2.39 | 19.72 | 8.65 | 0.34 | 25.44 | 2.84 |
| 5.5 | 139.7 | 6.2 | 14.27 | 3.0 | 4.2 | 3.6 | 17 | 111.31 | 190 | 16.8 | 2.63 | 22.45 | 8.65 | 0.34 | 25.44 | 3.24 |
| 6.625 | 168.3 | 7.32 | 14.27 | 3.9 | 5.4 | 4.65 | 17 | 112.45 | 190 | 16.8 | 3.16 | 27.25 | 8.65 | 0.34 | 25.44 | 3.93 |
| 7 | 177.8 | 8.05 | 15.88 | 4.3 | 5.7 | 5.0 | 17 | 121.31 | 190 | 16.8 | 3.34 | 30.53 | 8.65 | 0.34 | 25.44 | 4.40 |

T' : Time required for one rotation of the pipe

As shown in Table 1, in a lubricant applying apparatus 1 according to the present invention, if the feed rate of lubricant 9 by the first metering pump 4a, the rate of circulation of lubricant 9 by pump 12, the distance of nozzles 19a and 20a from the pin 8a, and the angles of the spray guns 19 and 20 at the time of spraying are all maintained constant at previously determined values, it can be seen that a lubricant 9 can be applied to the pin 8a of the steel pipe P to a desired thickness which satisfies tolerances regardless of the outer diameter of a steel pipe by controlling by means of the controlling unit 7 only the rotational speed of the steel pipe P by the steel pipe support unit 2 and the speeds of movement of spray guns 19 and 20 by the first spray gun support unit 24.

Fine adjustment of the coating thickness can be easily carried out by varying the rotational speed of the first metering pump 4a and varying the feed rate of the lubricant 9.

In this manner, according to the present invention, a highly viscous lubricant can be thinly and uniformly applied with a predetermined coating weight to the surface of a pin or a box of a threaded joint for pipes and particularly to the surface of a pin which is typically formed on the end of a long steel pipe and which is difficult to coat. Specifically, the highly viscous lubricant can be uniformly applied to a thickness of around 1/10 of the conventional value.

## Claims

1.  An apparatus (1) for application of a lubricant (9) to a threaded portion (8a, 8b) formed on the outer or inner surface on the end (8) of a steel pipe (P) which constitutes a pin or a box of a threaded joint for pipes, the apparatus comprising

    a steel pipe support unit (2) which supports the steel pipe (P) while rotating the pipe (P) about its central axis,

    a lubricant spraying unit (5, 5a, 5b) comprising a lubricant feed passage (15a, 16a, 21a) for feeding the lubricant (9), an air feed passage (17a, 18a, 22a) designed to feed air for atomization independently of the lubricant feed passage (15a, 16a, 21a), and at least one spray gun (19, 20, 23) having a nozzle (19a, 20a, 23a) at its tip designed to spray lubricant (9) at the outer or inner surface on the end (8) of a steel pipe (9) through the nozzle (19a, 20a, 23a), the lubricant and air feed passages (15a, 16a, 17a, 18a, 21a, 22a) having a junction in the vicinity of the nozzle (19a, 20a, 23a) of the spray gun (19, 20, 23) to atomize the lubricant (9), and

    a spray gun support unit (6) which supports the spray gun (19, 20, 23) such that it can move in the axial and/or radial direction of the steel pipe (P),

    **characterized by** further comprising:

    a lubricant circulation system (3) comprising a tank (10) for storing a lubricant (9) which has a sprayable viscosity, piping (11) through which the lubricant (9) can circulate, and a pump (12) for forcing the lubricant (9) to circulate through the piping (11),

    a metering unit (4) comprising a metering pump (4a) in order to meter the feed of lubricant (9) circulating through the lubricant circulation system (3),

    and wherein

    the lubricant feed passage (15a, 16a, 21a) is for feeding the lubricant (9) fed by the metering unit (4),

    the at least one spray gun (19, 20,23) comprises two spray guns (19, 20) to spray lubricant (9) at the threaded portion (8a) formed on the outer surface of the end (8) of the steel pipe (P) which constitutes the pin,

    the two spray guns (19, 20) are located in positions different in the circumferential direction of the steel pipe (P), and

    a first spray gun (19) of the two spray guns is sloped by 20-40° towards the end (8) of the steel pipe (P) with respect to a surface perpendicular to the longitudinal axis of the steel pipe (P), and a second spray gun (20) of the two spray guns is sloped by 20 to 40° away from the end (8) of the steel pipe (P) with respect to a surface perpendicular to the longitudinal axis of the steel pipe (P).

2.  A lubricant application apparatus (1) as set forth in claim 1 wherein the metering pump (4a) is a rotary plunger pump.

3.  A lubricant application apparatus (1) as set forth in claim 1 or 2 wherein the lubricant (9) comprises at least one basic oily lubricant selected from a basic sulfonate salt, a basic salicylate salt, a basic phenate salt, and a basic carboxylate salt and has a biodegradability (BOD value) after 28 days in sea water of at least 20%.

4.  A lubricant application apparatus (1) as set forth in claim 1 or 2 wherein the viscosity of the lubricant (9) is adjusted by diluting with a volatile solvent or by heating.

5. A lubricant application apparatus (1) as set forth in claim 1 or 2 wherein the tank (10) has a stirrer for stirring the lubricant contained in the tank.

6. A lubricant application apparatus (1) as set forth in claim 1 or 2 wherein the apparatus further comprises a controlling unit (7) for controlling the rotational speed of a steel pipe (P) by the steel pipe support unit (2) and the speed of movement of the spray gun (19, 20, 23) by the spray gun support unit (6) so as to satisfy the relationship given by Equation (1): $V, \leq m \times n \times L$ wherein L is the length of the major axis (mm) of the sprayed pattern on the surface of the pipe (P) of lubricant (9) which is sprayed from the spray gun (19, 20, 23), n is the rotational speed (rpm) of the steel pipe, m is the number of nozzles in the axial direction of the steel pipe (P), and V is the speed of movement (mm/minute) of the spray gun (19, 20, 23) by the spray gun support unit (2) in the axial direction.

7. A method of applying a lubricant (9) to a threaded portion (8a, 8b) formed on the outer or inner surface on the end (8) of a steel pipe (P) which constitutes a pin or a box of a threaded joint for pipes, the method comprising:

feeding lubricant (9) and atomizing air separately to at least one spray gun (19, 20, 23) having a nozzle (19a, 20a, 23a) at its tip, the lubricant (9) having a viscosity adjusted so that it is sprayable, mixing the supplied lubricant (9) and the atomizing air in the vicinity the nozzle (19a, 20a, 23a) of the at least one spray gun (19, 20, 23) for atomization of the lubricant (9), and spraying the atomized lubricant (9) at the threaded portion (8a, 8b) of the steel pipe (P) from the nozzle (19a, 20a, 23a) of the at least one spray gun (19, 20, 23) while the at least one spray gun (19, 20, 23) is moved in the axial direction and/or the radial direction of the steel pipe (P) and the steel pipe (P) is rotated about its central axis, **characterized in that**:

the lubricant (9) is circulated,
the spraying comprises spraying the atomised lubricant (9) at the threaded portion (8a) formed on the outer surface of the end (8) of the steel pipe (P) which constitutes the pin from the nozzle (19a, 20a) of a first and a second spray gun (19, 20) of the at least one spray gun while the first and second spray guns (19, 20) are moved in the axial direction and/or the radial direction of the steel pipe (P) and the steel pipe (P) is rotated about its central axis,
the first spray gun (19) and the second spray gun (20) being located in positions different in the circumferential direction of the steel pipe (P),
the first spray gun (19) of the two spray guns is sloped by 20-40° towards the end of the steel pipe (P) with respect to a surface perpendicular to the longitudinal axis of the steel pipe (P), and the second spray gun (20) of the two spray guns is sloped by 20 to 40° away from the end (8) of the steel pipe (P) with respect to a surface perpendicular to the longitudinal axis of the steel pipe (P).

8. A method as set forth in claim 7 wherein the rotational speed of a steel pipe (P) and the speed of movement of the spray gun (19, 20, 23) are controlled so as to satisfy the relationship given by Equation (1): $V \leq m \times n \times L$ wherein L is the length of the major axis (mm) of the sprayed pattern on the surface of the pipe (P) of lubricant (9) which is sprayed from the spray gun (19, 20, 23), n is the rotational speed (rpm) of the steel pipe (P), m is the number of nozzles (19a, 20a, 23a) in the axial direction of the steel pipe (P), and V is the speed of movement (mm/minute) of the spray gun (19, 20, 23) in the axial direction.

**Patentansprüche**

1. Vorrichtung (1) zum Auftragen eines Schmiermittels (9) auf ein Gewindeteil (8a, 8b), das auf der Außen- oder Innenfläche am Ende (8) eines Stahlrohrs (P), das einen Bolzen oder ein Gehäuse einer Gewindeverbindung für Rohre darstellt, gebildet ist, wobei die Vorrichtung umfasst:

eine Trägereinheit für Stahlrohre (2), die das Stahlrohr (P) trägt, während sie gleichzeitig das Rohr (P) um seine zentrale Achse rotiert,
eine Einheit zum Sprühen von Schmiermittel (5, 5a, 5b), umfassend einen Schmiermittelzuführkanal (15a, 16a, 21a) zum Zuführen des Schmiermittels (9), einen Luftförderkanal (17a, 18a, 22a), der dazu ausgelegt ist, Luft unabhängig vom Schmiermittelzuführkanal (15a, 16a, 21a) für eine Zerstäubung zuzuführen, und mindestens eine Sprühpistole (19, 20, 23) mit einer Düse (19a, 20a, 23a) an der Spitze, die dazu ausgelegt ist, durch die Düse (19a, 20a, 23a) Schmiermittel (9) an die Außen- oder Innenfläche am Ende (8) eines Stahlrohrs (9) zu sprühen, wobei die Schmiermittel- und Luftförderkanäle (15a, 16a, 17a, 18a, 21a, 22a) eine Verbindungsstelle in der Nähe der Düse (19a, 20a, 23a) der Sprühpistole (19, 20, 23) zum Zerstäuben des Schmiermittels (9) aufweisen, und

eine Trägereinheit für Sprühpistolen (6), die die Sprühpistole (19, 20, 23) trägt, sodass sich diese in die Axial- und/oder Radialrichtung des Stahlrohrs (P) bewegen kann,

**gekennzeichnet dadurch, dass** sie des Weiteren umfasst:

ein System zum Zirkulieren des Schmiermittels (3), umfassend einen Behälter (10) zum Aufbewahren eines Schmiermittels (9), das eine sprühbare Viskosität aufweist, eine Rohrleitung (11) durch die das Schmiermittel (9) zirkulieren kann, und eine Pumpe (12) zum Veranlassen des Schmiermittels (9) zum Zirkulieren durch die Rohrleitung (11),
eine Dosiereinheit (4), umfassend eine Dosierpumpe (4a) zum Dosieren des Zuführens des Schmiermittels (9), das durch das System zur Zirkulation des Schmiermittels (3) zirkuliert

und wobei

der Schmiermittelzuführkanal (15a, 16a, 21a) zum Zuführen des von der Dosiereinheit (4) zugeführten Schmiermittels (9) vorgesehen ist,
die mindestens eine Sprühpistole (19, 20, 23) zwei Sprühpistolen (19, 20) zum Sprühen von Schmiermittel (9) auf das Gewindeteil (8a) umfasst, das auf der Außenfläche des Endes (8) des Stahlrohrs (P), das den Bolzen darstellt, gebildet wird,

die zwei Sprühpistolen (19, 20) sich in Positionen befinden, die hinsichtlich der Umfangsrichtung des Stahlrohrs (P) unterschiedlich sind, und
eine erste Sprühpistole (19) der zwei Sprühpistolen sich um 20 - 40° in Richtung des Endes (8) des Stahlrohrs (9) in Bezug auf eine vertikal zur Längsachse des Stahlrohrs (P) verlaufenden Oberfläche neigt und eine zweite Sprühpistole (20) der zwei Sprühpistolen sich um 20 bis 40° vom Ende (8) des Stahlrohrs (P) weg in Bezug auf eine vertikal zur Längsachse des Stahlrohrs (P) verlaufenden Oberfläche neigt.

2. Vorrichtung zum Auftragen von Schmiermittel (1), wie in Anspruch 1 dargelegt, wobei die Dosierpumpe (4a) eine rotierende Kolbenpumpe ist.

3. Vorrichtung zum Auftragen von Schmiermittel (1), wie in Anspruch 1 oder 2 dargelegt, wobei das Schmiermittel (9) mindestens ein basisches ölhaltiges Schmiermittel umfasst, ausgewählt aus einem basischen Sulfonatsalz, einem basischen Salicylatsalz, einem basischen Phenatsalz und einem basischen Carboxylatsalz und wobei das Schmiermittel nach 28 Tagen in Meerwasser eine biologische Abbaubarkeit (BSB-Wert) von 20 % aufweist.

4. Vorrichtung zum Auftragen von Schmiermittel (1), wie in Anspruch 1 oder 2 dargelegt, wobei die Viskosität des Schmiermittels (9) durch das Verdünnen mit einem flüchtigen Lösungsmittel oder durch Erwärmen angepasst wird.

5. Vorrichtung zum Auftragen von Schmiermittel (1), wie in Anspruch 1 oder 2 dargelegt, wobei der Behälter (10) eine Rührvorrichtung zum Rühren des im Behälter enthaltenen Schmiermittels aufweist.

6. Vorrichtung zum Auftragen von Schmiermittel (1) wie in Anspruch 1 oder 2 dargelegt, wobei die Vorrichtung des Weiteren eine Steuereinheit (7) zum Steuern der Rotationsgeschwindigkeit eines Stahlrohrs (P) durch die Trägereinheit für Stahlrohre (2) und der Bewegungsgeschwindigkeit der Sprühpistole (19, 20, 23) durch die Trägereinheit für Sprühpistolen (6), sodass die durch die Gleichung (1): V, ≤ m x n x L hergestellte Beziehung erfüllt wird, wobei L die Länge der Hauptachse (mm) des gesprühten Musters von Schmiermittel (9) auf der Oberfläche des Rohrs (P) darstellt, das von der Sprühpistole (19, 20, 23) gesprüht wird, die Rotationsgeschwindigkeit (1/min) des Stahlrohrs, m die Anzahl der Düsen in der Axialrichtung des Stahlrohrs (P) und V die Bewegungsgeschwindigkeit (mm/Minute) der Sprühpistole (19, 20, 23) durch die Trägereinheit für Sprühpistolen (2) in die Axialrichtung darstellt.

7. Verfahren zum Auftragen eines Schmiermittels (9) auf ein Gewindeteil (8a, 8b), das an der Außen- oder Innenfläche am Ende (8) eines Stahlrohrs (P) gebildet ist, das einen Bolzen oder ein Gehäuse einer Gewindeverbindung für Rohre darstellt, wobei das Verfahren umfasst:

Zuführen von Schmiermittel (9) und separates Zerstäuben von Luft an mindestens eine Sprühpistole (19, 20, 23) mit einer Düse (19a, 20a, 23a) an ihrer Spitze, wobei das Schmiermittel (9) eine angepasste Viskosität aufweist, sodass es sprühbar ist, Mischen des bereitgestellten Schmiermittels (9) mit der Zerstäubungsluft in der Nähe der Düse (19a, 20a, 23a) der mindestens einen Sprühpistole (19, 20, 23) zur Zerstäubung des Schmiermittels (9) und Sprühen des zerstäubten Schmiermittels (9) aus der Düse (19a, 20a, 23a) der mindestens einen Sprühpistole (19, 20, 23) auf das Gewindeteil (8a, 8b) des Stahlrohrs (P), während gleichzeitig die mindestens eine Sprühpistole (19, 20, 23) in die Axial- und/oder Radialrichtung des Stahlrohrs (P) bewegt wird und das Stahlrohr (P) um seine zentrale Achse rotiert wird,

**gekennzeichnet dadurch, dass**:

das Schmiermittel (9) zirkuliert wird,

das Sprühen das Sprühen aus der Düse (19a, 20a) einer ersten und einer zweiten Sprühpistole (19, 20) der mindestens einen Sprühpistole des zerstäubten Schmiermittels (9) auf das Gewindeteil (8a), das auf der Außenfläche des Endes (8) des Stahlrohrs (P), das den Bolzen darstellt, gebildet wird, während gleichzeitig die erste und zweite Sprühpistole (19, 20) in die Axial- und/oder Radialrichtung des Stahlrohrs (P) bewegt werden und das Stahlrohr (P) um seine zentrale Achse rotiert wird,

die erste Sprühpistole (19) und die zweite Sprühpistole (20) sich in Positionen befinden, die hinsichtlich der umlaufenden Richtung des Stahlrohrs (P) unterschiedlich sind,

die erste Sprühpistole (19) der zwei Sprühpistolen sich um 20 - 40 ° in Richtung des Endes des Stahlrohrs (P) in Bezug auf eine vertikal zur Längsachse des Stahlrohrs (P) verlaufenden Oberfläche neigt, und die zweite Sprühpistole (20) der zwei Sprühpistolen sich um 20 - 40 ° vom Ende (8) des Stahlrohrs weg in Bezug auf eine vertikal zur Längsachse des Stahlrohrs (P) verlaufenden Oberfläche neigt.

8.  Verfahren wie in Anspruch 7 dargelegt, wobei die Rotationsgeschwindigkeit eines Stahlrohrs (P) und die Bewegungsgeschwindigkeit der Sprühpistole (19, 20, 23) so gesteuert werden, dass sie die durch die Gleichung (1): V, $\leq m \times n \times L$ hergestellte Beziehung erfüllen, wobei L die Länge der Hauptachse (mm) des gesprühten Musters von Schmiermittel (9) auf der Oberfläche des Rohrs (P) darstellt, das von der Sprühpistole (19, 20, 23) gesprüht wird, n die Rotationsgeschwindigkeit (1/min) des Stahlrohrs (P), m die Anzahl der Düsen (19a, 20a, 23a) in der Axialrichtung des Stahlrohrs (P) und V die Bewegungsgeschwindigkeit (mm/Minute) der Sprühpistole (19, 20, 23) in die Axialrichtung darstellt.

## Revendications

1.  Dispositif (1) pour une application de lubrifiant (9) sur une partie filetée (8a, 8b) formée sur la surface externe ou interne de l'extrémité (8) d'un tuyau en acier (P) qui constitue une pointe ou un boîtier de joint fileté pour tuyaux, le dispositif comprenant

    une unité de support de tuyau en acier (2) qui supporte le tuyau en acier (P) tout en faisant tourner le tuyau en acier (P) sur son axe central.

    une unité de pulvérisation de lubrifiant (5, 5a, 5b) comprenant un passage d'alimentation en lubrifiant (15a, 16a, 21a) pour alimenter en lubrifiant (9), un passage d'alimentation en air (17a, 18a, 22a) conçu pour alimenter en air pour une atomisation indépendamment du passage d'alimentation en lubrifiant (15a, 16a, 21a), et au moins un pistolet pulvérisateur (19, 20, 23) présentant une buse (19a, 20a, 23a) à son extrémité conçue pour pulvériser du lubrifiant (9) au niveau de la surface externe ou interne à l'extrémité (8) d'un tuyau en acier (P) par l'intermédiaire la buse (19a, 20a, 23a), les passages d'alimentation en lubrifiant et en air (15a, 16a, 17a, 18a, 21a, 22a) ayant une jonction à proximité de la buse (19a, 20a, 23a) du pistolet pulvérisateur (19, 20, 23) pour atomiser le lubrifiant (9), et une unité de support de pistolet pulvérisateur (6) qui supporte le pistolet pulvérisateur (19, 20, 23) de sorte qu'il puisse se déplacer dans la direction axiale et/ou radiale du tuyau en acier (P),

    **caractérisé en ce qu'**il comprend en outre :

    un système de circulation de lubrifiant (3) comprenant un réservoir (10) pour stocker un lubrifiant (9) qui a une viscosité pulvérisable, une tuyauterie (11) dans laquelle le lubrifiant (9) peut circuler, et une pompe (12) pour forcer le lubrifiant (9) à circuler dans la tuyauterie (11),

    une unité de dosage (4) comprenant une pompe doseuse (4a) afin de doser l'alimentation de lubrifiant (9) circulant dans le système de circulation de lubrifiant (3),

    et où

    le passage d'alimentation en lubrifiant (15a, 16a, 21a) sert à alimenter en lubrifiant (9) alimenté par l'unité de dosage (4),

    l'au moins un pistolet pulvérisateur (19, 20, 23) comprend deux pistolets pulvérisateurs (19, 20) pour pulvériser du lubrifiant (9) au niveau de la partie filetée (8a) formée sur la surface externe de l'extrémité (8) du tuyau en acier (P) qui constitue la pointe,

les deux pistolets pulvérisateurs (19, 20) se situent dans des positions différentes dans la direction circonférentielle du tuyau en acier (P), et
un premier pistolet pulvérisateur (19) des deux pistolets pulvérisateurs est incliné de 20 à 40° vers l'extrémité (8) du tuyau en acier (P) par rapport à une surface perpendiculaire à l'axe longitudinal du tuyau en acier (P), et un deuxième pistolet pulvérisateur (20) des deux pistolets pulvérisateurs est incliné de 20 à 40° en éloignement de l'extrémité (8) du tuyau en acier (P) par rapport à une surface perpendiculaire à l'axe longitudinal du tuyau en acier (P).

2. Dispositif d'application de lubrifiant (1) selon la revendication 1, où la pompe doseuse (4a) est une pompe à piston rotatif.

3. Dispositif d'application de lubrifiant (1) selon la revendication 1 ou 2, où le lubrifiant (9) comprend au moins un lubrifiant huileux basique choisi parmi un sel de sulfonate basique, un sel de salicylate basique, un sel de phénate basique et un sel de carboxylate basique et présente une valeur de biodégradabilité (BOD) d'au moins 20 % après 28 jours dans de l'eau de mer.

4. Dispositif d'application de lubrifiant (1) selon la revendication 1 ou 2, où la viscosité du lubrifiant (9) est ajustée par dilution avec un solvant volatile ou par chauffage.

5. Dispositif d'application de lubrifiant (1) selon la revendication 1 ou 2, où le réservoir (10) comporte un agitateur pour agiter le lubrifiant contenu dans le réservoir.

6. Dispositif d'application de lubrifiant (1) selon la revendication 1 ou 2, où le dispositif comprend en outre une unité de commande (7) pour commander la vitesse de rotation d'un tuyau en acier (P) par l'unité de support de tuyau en acier (2) et la vitesse de déplacement du pistolet pulvérisateur (19, 20, 23) par l'unité de support de pistolet pulvérisateur (6) afin de satisfaire la relation donnée par l'Équation (1) : $V, \leq m \times n \times L$ où L est la longueur de l'axe principal (en mm) du motif de pulvérisation de lubrifiant (9) qui est pulvérisé depuis le pistolet pulvérisateur (19, 20, 23) sur la surface du tuyau (P), n est la vitesse de rotation (en tr/min) du tuyau en acier, m est le nombre de buses dans la direction axiale du tuyau en acier (P), et V est la vitesse de déplacement (mm/minute) du pistolet pulvérisateur (19, 20, 23) par l'unité de support de pistolet pulvérisateur (2) dans la direction axiale.

7. Procédé d'application de lubrifiant (9) sur une partie filetée (8a, 8b) formée sur la surface externe ou interne de l'extrémité (8) d'un tuyau en acier (P) qui constitue une pointe ou un boîtier de joint fileté pour tuyaux, le procédé comprenant :

l'alimentation en lubrifiant (9) et en air d'atomisation séparément d'au moins un pistolet pulvérisateur (19, 20, 23) présentant une buse (19a, 20a, 23a) à son extrémité, le lubrifiant (9) ayant une viscosité ajustée afin d'être pulvérisable, le mélange du lubrifiant (9) fourni et de l'air d'atomisation à proximité de la buse (19a, 20a, 23a) de l'au moins un pistolet pulvérisateur (19, 20, 23) pour une atomisation du lubrifiant (9), et la pulvérisation du lubrifiant atomisé (9) au niveau de la partie filetée (8a, 8b) du tuyau en acier (P) depuis la buse (19a, 20a, 23a) de l'au moins un pistolet pulvérisateur (19, 20, 23) tandis que l'au moins un pistolet pulvérisateur (19, 20, 23) est déplacé dans la direction axiale et/ou la direction radiale du tuyau en acier (P) et le tuyau en acier (P) effectue une rotation sur son axe central, **caractérisé en ce que** :

le lubrifiant (9) est mis en circulation,
la pulvérisation comprend la pulvérisation du lubrifiant atomisé (9) au niveau de la partie filetée (8a) formée sur la surface externe de l'extrémité (8) du tuyau en acier (P) qui constitue la pointe de la buse (19a, 20a) d'un premier et d'un deuxième pistolet pulvérisateur (19, 20) de l'au moins un pistolet pulvérisateur tandis que les premier et deuxième pistolets pulvérisateurs (19, 20) sont déplacés dans la direction axiale et/ou la direction radiale du tuyau en acier (P) et le tuyau en acier (P) effectue une rotation sur son axe central, le premier pistolet pulvérisateur (19) et le deuxième pistolet pulvérisateur (20) étant situés dans des positions différentes dans la direction circonférentielle du tuyau en acier (P),
le premier pistolet pulvérisateur (19) des deux pistolets pulvérisateurs est incliné de 20 à 40° vers l'extrémité du tuyau en acier (P) par rapport à une surface perpendiculaire à l'axe longitudinal du tuyau en acier (P), et le deuxième pistolet pulvérisateur (20) des deux pistolets pulvérisateurs est incliné de 20 à 40° en éloignement de l'extrémité (8) du tuyau en acier (P) par rapport à une surface perpendiculaire à l'axe longitudinal du tuyau en acier (P).

8. Procédé selon la revendication 7, où la vitesse de rotation d'un tuyau en acier (P) et la vitesse de déplacement du pistolet pulvérisateur (19, 20, 23) sont commandées de sorte à satisfaire la relation donnée par l'Équation (1) : V, $\leq$ m x n x L où L est la longueur de l'axe principal (en mm) du motif de pulvérisation de lubrifiant (9) qui est pulvérisé depuis le pistolet pulvérisateur (19, 20, 23) sur la surface du tuyau (P), n est la vitesse de rotation (en tr/min) du tuyau en acier (P), m est le nombre de buses (19a, 20a, 23a) dans la direction axiale du tuyau en acier (P), et V est la vitesse de déplacement (mm/minute) du pistolet pulvérisateur (19, 20, 23) dans la direction axiale.

**Fig. 1**

EP 2 415 528 B1

Fig. 2

**Fig. 3**

(a)

(b)

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58219964 A
- JP 62061667 A
- US 20090264326 A1
- WO 2006065149 A
- JP S623027 A